# EUROPÄISCHE PATENTSCHRIFT

(11) **EP 3 504 096 B1**
(45) Veröffentlichungstag und Bekanntmachung des Hinweises auf die Patenterteilung: **19.05.2021**
(21) Anmeldenummer: 17816483.6
(22) Anmeldetag: 22.11.2017
(51) Int. Cl.: B61D 17/20, B62D 47/02, B61D 13/00, B60D 5/00, B61D 19/02

(54) **GELENKFAHRZEUG**
ARTICULATED VEHICLE
VÉHICULE ARTICULÉ

(30) Priorität: 25.11.2016 AT 510742016
(43) Veröffentlichungstag der Anmeldung: 03.07.2019
(73) Patentinhaber: Siemens Mobility Austria GmbH, 1210 Wien (AT)
(72) Erfinder: NEDELIK, Robert, 1100 Wien (AT)
(74) Vertreter: Deffner, Rolf
(86) Internationale Anmeldenummer: PCT/EP2017/080097
(87) Internationale Veröffentlichungsnummer: WO 2018/095984

(56) Entgegenhaltungen:
- EP-A1- 0 915 000
- WO-A1-98/04450
- WO-A1-2013/087206
- CH-A- 359 733
- DE-A1-102013 208 849
- DE-A1-102014 207 471
- DE-B- 1 142 894
- JP-A- 2009 120 091
- US-A1- 2003 172 835

## Beschreibung

### Technisches Gebiet

Die Erfindung betrifft ein Gelenkfahrzeug, insbesondere ein Gelenkfahrzeug für den Personennahverkehr.

### Stand der Technik

Passagierschienenfahrzeuge für den Nahverkehr zeichnen sich durch die Erfordernis eines raschen Passagierwechsels aus, damit die Haltezeit in den Stationen möglichst kurz gehalten werden kann. Diese typischen Nahverkehrsmittel wie Busse, Straßenbahnen, U-Bahnen, etc. sind daher mit mehreren, üblicherweise zweiflügeligen Passagierraumtüren ausgestattet. Der im Türbereich liegende Teil des Passagierraums ist dabei von Sitzplätzen freizuhalten. Busse und Straßenbahnen sind sehr häufig als Gelenkfahrzeuge aufgebaut, bei welchen mehrere Wagenkästen mittels Gelenken verbunden sind und solcherart die bei Straßenfahrzeugen oder gebräuchlichen geringen Kurvenradien durchfahren können. Diese Gelenkbereiche sind für den Aufenthalt von Passagieren geeignet aber unter anderem wegen fehlender Fenster in diesen Bereichen unattraktiv. Aufgrund der im Fahrbetrieb auftretenden Bewegungen im Gelenkbereich ist eine Anordnung des Einstieges in diesem Bereich bisher nicht möglich. Die Einstiegsbereiche sind daher auch bei Gelenkfahrzeugen in Bereichen höherer Aufenthaltsqualität angeordnet
Das Dokument CH 359 733 A beschreibt ein Gelenkfahrzeug, bei welchem ein Kuppelteil zwischen zwei weitere Wagenkästen, Vor- und Nachläufer, gekuppelt ist. Die Drehachsen um die Hochachse sind dabei zwischen den Vor- und Nachläufern und dem Kuppelteil vorgesehen, was einer konventionellen Konfiguration entspricht.

Das Dokument DE 11 42 894 B beschreibt einen Nahverkehrszug aus Endwagen, Mittelwagen und Zwischenwagen, wobei einzig die Zwischen- und Endwagen mit Fahrwerken ausgestattet sind, die Zwischenwagen also ein Jakobsdrehgestell bilden. Dabei sind die Zwischenwagen so groß ausgeführt, dass in ihnen Passagierraumtüren angeordnet werden können.

### Darstellung der Erfindung

Der Erfindung liegt daher die Aufgabe zugrunde, ein Gelenkfahrzeug für den Personentransport anzugeben, bei welchem die Passagierraumtüren in bisher ausschließlich mit Stehplätzen ausstattbaren Bereichen angeordnet sind.

Die Aufgabe wird durch ein Gelenkfahrzeug mit den Merkmalen des Anspruchs 1 gelöst. Vorteilhafte Ausgestaltungen sind Gegenstand untergeordneter Ansprüche.

Dem Grundgedanken der Erfindung nach wird ein Gelenkfahrzeug aufgebaut, welches Wagenkästen und mindestens einen, zwischen Wagenkästen angeordneten Übergangswagen umfasst, wobei der Übergangswagen aus drei Abschnitten aufgebaut ist, wobei zwei Endabschnitte an gegenüberliegenden Enden eines Mittelabschnitts angeordnet und mit dem Mittelabschnitt jeweils über ein Schwenkgelenk verbunden sind, welches einer Schwenkbarkeit der Endabschnitte gegenüber dem Mittelabschnitt um eine Hochachse des Gelenkfahrzeugs erlaubt, und wobei die Endabschnitte jeweils mit benachbarten Wagenkästen über Gelenke verbunden sind, welche eine Schwenkbarkeit um eine Querachse des Gelenkfahrzeugs oder eine Längsachse des Gelenkfahrzeugs erlauben, und wobei in dem Mittelabschnitt mindestens eine Passagierraumtür angeordnet ist.

Dadurch ist der Vorteil erzielbar, ein Gelenkfahrzeug aufbauen zu können, bei welchen den Anteil des Passagierraums, welcher mit Sitzplätzen ausgestattet werden kann maximiert ist. Da die von Sitzplätzen freizuhaltenden Einstiegsbereiche im Innenraum in den bei Fahrzeugen gemäß dem Stand der Technik nur als Stehplätze genutzten

Übergangsbereichen (Gelenkbereiche) angeordnet werden können, sind Fahrzeuge mit höherer Sitzplatzanzahl bei gleichbleibenden Außenabmessungen herstellbar.

Erfindungsgemäß umfasst das Gelenkfahrzeug Wagenkästen und mindestens einen Übergangswagen. Die Wagenkästen bilden herkömmliche Fahrzeuge mit Passagierbereichen und gegebenenfalls Fahrerständen oder Lenkerplätzen. Der Übergangswagen ist dreiteilig aufgebaut und erfüllt die für Kurvenfahrten erforderliche Schwenkbarkeit. Dazu ist der Übergangswagen aus einem Mittelteil und zwei Endteilen aufgebaut, welche in Fahrzeuglängsrichtung beidseitig des Mittelteils angeordnet und mit dem Mittelteil jeweils schwenkbar verbunden sind. Dabei ist eine Schwenkbarkeit um eine Hochachse (Z-Achse) des Fahrzeugs vorgesehen, hingegen ist keine Beweglichkeit um die weiteren Raumachsen (X- und Y-Achse) vorzusehen. Die Schwenkachsen um die Hochachse sind in der Fahrzeugmittelachse anzuordnen, wobei die Schwenkachsen des ersten Endteils und die des zweiten Endteils zueinander parallel angeordnet sind, aber nicht identisch sein müssen. Ein solcher Mittelteil kann somit die für Kurvenfahrt erforderliche Verschwenkung vornehmen, jedoch ist die für Kurven- bzw. Wannenfahrten erforderliche Schwenkbarkeit um eine Querachse (Y-Achse) des Fahrzeugs gesperrt. Ebenso ist kein Wanken (Verschwenken der Endteile und des Mittelteils um die Fahrzeuglängsachse) möglich. Da diese Verschwenkungen (Freiheitsgrade der Bewegung) für das gesamte Gelenkfahrzeug jedoch erforderlich sind, ist an den Verbindungsstellen des Übergangswagens mit benachbarten Wagenkästen eine entsprechende Beweglichkeit sicherzustellen. An diesen Verbindungsstellen kann eine Schwenkbarkeit um eine Hochachse jedoch entfallen, da diese Funktionalität durch die beweglichen Verbindungen der Endteile mit dem Mittelteil des Übergangswagens erfüllt ist. Jedenfalls ist an den Verbindungsstellen der Wagenkästen mit dem Übergangswagen eine Beweglichkeit (Freiheitsgrad) um eine Querachse vorzusehen um Kuppen- und Wannenfahrten vornehmen zu können. Ob eine Beweglichkeit um die Fahrzeuglängsache an diesen Verbindungsstellen erforderlich ist, ist von der Auslegung des gesamten Gelenkfahrzeugs abhängig. Allgemein ist ein freies Wanken der einzelnen Wagenkästen, bzw. des Übergangswagens vorteilhaft um zu große Kräfte in der Fahrzeugstruktur zu verhindern. Jedoch bedürfen Abschnitte des Gelenkfahrzeugs, welche kein eigenes Fahrwerk umfassen (Sänftenfahrzeuge) einer Wankabstützung mit mindestens einem benachbarten, mit einem Fahrwerk ausgestatteten Fahrzeug (bzw. Abschnitt eines Gelenkfahrzeugs). Bei gegenständlichem Gelenkfahrzeug ist es besonders vorteilhaft, den Übergangswagen als sogenannten Sänftenwagen auszuführen, welcher von den benachbarten Wagen getragen wird. Somit ist eine Wankabstützung des Übergangswagens unerläßlich. Vorteilhafterweise kann diese Wankabstützung dadurch realisiert werden, dass eine Verbindungsstelle des mit einem der benachbarten Wagenkästen ein Wanken zuläßt (Freiheitsgrad um die X- Achse geöffnet) und die weitere Verbindungsstelle mit dem weiteren benachbarten Wagenkasten eine Wanksperre umfasst (Freiheitsgrad um die X-Achse gesperrt). Solcherart kann der Übergangswagen Wankbewegungen nur gemeinsam mit dem weiteren benachbarten Wagenkasten ausführen.

### Kurzbeschreibung der Zeichnungen

Es zeigen beispielhaft:
**Fig.1** Gelenkfahrzeug, Türen geschlossen.
**Fig.2** Gelenkfahrzeug, Türen geöffnet.
**Fig.3** Gelenkfahrzeug, Dach teileweise entfernt.
**Fig.4** Gelenkfahrzeug, Dach entfernt.

### Ausführung der Erfindung

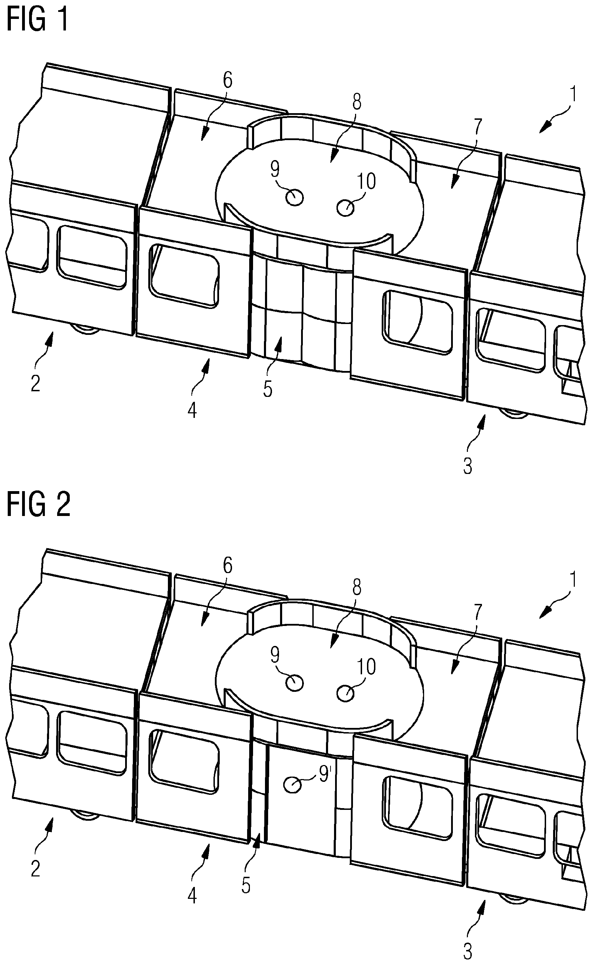

**Fig.1** zeigt beispielhaft und schematisch ein Gelenkfahrzeug mit geschlossenen Türen. Es ist ein Gelenkfahrzeug 1 in einer Ansicht auf einen Abschnitt mit einem Übergangswagen 4 dargestellt, welcher an einem Ende mit einem ersten Wagenkasten 2 und an seinem weiteren Ende mit einem zweiten Wagenkasten 3 verbunden ist. Die Wagenkästen 2, 3 umfassen jeweils mindestens ein Fahrwerk und tragen den Übergangswagen 4 als Sänftenwagen, der Übergangswagen 4 in gezeigtem Ausführungsbeispiel umfasst kein eigenes Fahrwerk. Der Übergangswagen 4 ist in drei Abschnitte, den Mittelabschnitt 8, sowie den ersten 6 und den zweiten Endabschnitt 7 gegliedert. Dabei ist der erste Endabschnitt 6 mit dem Mittelabschnitt 8 über ein erstes Schwenkgelenk 9 um eine Hochachse schwenkbar verbunden, sodass an dieser Stelle ein Knicken des Gelenkfahrzeugs 1 erfolgen kann und Kurvenfahrten ermöglicht werden. Der zweite Endabschnitt 7 ist auf dieselbe Art mittels eines zweiten Schwenkgelenks 10 mit dem Mittelabschnitt 8 um eine Hochachse schwenkbar verbunden. Dadurch umfasst das Gelenkfahrzeug 1 in dem dargestellten Abschnitt zwei Knickstellen. Die Schwenkgelenke 9, 10 sind zweckmäßigerweise jeweils mit einen dachseitigen Teil und einen bodenseitigen Teil ausgeführt, sodass der dazwischenliegende Bauraum als Passagierraum zur Verfügung steht. Die Verbindungsstellen des ersten Wagenkastens 2 mit dem ersten Endabschnitt 6 des Übergangswagens 4 weist keine Beweglichkeit um eine Hochachse auf, der erste Endabschnitt 6 und der erste Wagenkasten sind um die Hochachse fest verbunden. An dieser Verbindungsstelle ist es zweckmäßig eine Bewegungsmöglichkeit zwischen dem ersten Wagenkastens 2 und dem ersten Endabschnitt 6 um eine Querachse vorzusehen um Kuppen und Wannenfahrten zu ermöglichen. Die Verbindungsstelle zwischen dem zweiten Wagenkasten 3 und dem zweiten Endabschnitt 7 ist ebenfalls so aufgebaut. Die beiden genannten Verbindungsstellen können auch eine Beweglichkeit um eine Fahrzeuglängsachse aufweisen um ein Wanken der einzelnen Fahrzeugabschnitte zueinander zu ermöglichen, dazu ist eine Abstützung des Übergangswagens 4 erforderlich. Der Mittelabschnitt 8 des Übergangswagens 4 ist mit einer Passagierraumtür 5 ausgestattet, welcher in gezeigtem Ausführungsbeispiel als zweiflügelige Schiebetür ausgeführt ist.

**Fig.2** zeigt beispielhaft und schematisch ein Gelenkfahrzeug mit geöffneten Türen. Es ist das Gelenkfahrzeug 1 aus Fig.1 dargestellt, wobei die Tür 5 geöffnet ist. Dadurch ist das bodenseitige erste Schwenkgelenk 9' sichtbar, welche typischerweise unterhalb des Passagierraumbodens angeordnet ist.

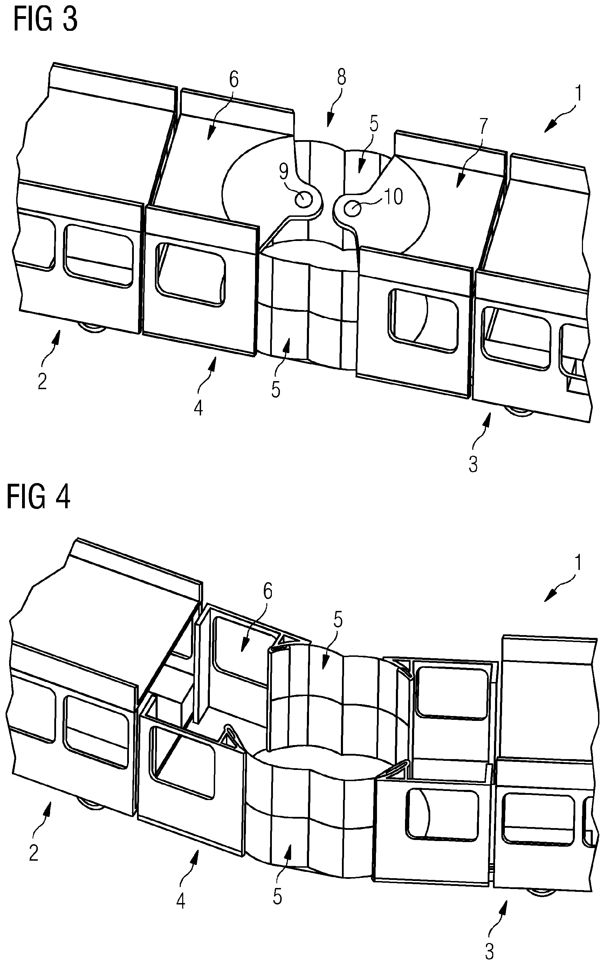

**Fig.3** zeigt beispielhaft und schematisch ein Gelenkfahrzeug, mit teilweise entferntem Dach. Es ist das Gelenkfahrzeug 1 aus Fig.1 dargestellt, wobei ein Teil des Dachs des Übergangswagens 4 abgenommen ist. Dadurch ist die Anordnung der Schwenkgelenke 9, 10 ersichtlich. Der Mittelabschnitt 8 ist beidseitig mit je einer Tür 5 ausgestattet, das Gelenkfahrzeug ist in Geradeausfahrt dargestellt.

**Fig.4** zeigt beispielhaft und schematisch ein Gelenkfahrzeug mit entferntem Dach in einer Kurvenfahrt. Es ist das Gelenkfahrzeug 1 aus Fig.3 dargestellt, wobei jedoch das Dach weiter entfernt wurde. Die Türen 5 befinden sich in geschlossener Position und sind jeweils als zweiflügelige Teleskopschiebetüren ausgebildet. Der Übergangswagen 4 sieht taschenförmige Räume neben den Türen 5 vor, in welche die Türblätter beim Öffnen geschoben werden. In Fig.4 ist das Gelenkfahrzeug 1 in Kurvenfahrt durch den engstmöglichen befahrbaren Gleisradius dargestellt, dabei ist zu erkennen, dass bei solcher Kurvenfahrt die Türen 5 auch vollständig öffenbar sind

### Liste der Bezeichnungen

- 1: Gelenkfahrzeug
- 2: Erster Wagenkasten
- 3: Zweiter Wagenkasten
- 4: Übergangswagen
- 5: Passagierraumtür
- 6: Erster Endabschnitt
- 7: Zweiter Endabschnitt
- 8: Mittelabschnitt
- 9: Erstes Schwenkgelenk dachseitig
- 9': Erstes Schwenkgelenk bodenseitig
- 10: Zweites Schwenkgelenk dachseitig

## Patentansprüche

1. Gelenkfahrzeug (1), umfassend Wagenkästen (2, 3) und mindestens einen, zwischen Wagenkästen (2, 3) angeordneten Übergangswagen (4),
**dadurch gekennzeichnet, dass** der Übergangswagen (4) aus drei Abschnitten (6, 7, 8) aufgebaut ist, wobei zwei Endabschnitte (6, 7) an gegenüberliegenden Enden eines Mittelabschnitts (8) angeordnet und mit dem Mittelabschnitt (8) jeweils über ein Schwenkgelenk (9, 10) verbunden sind, welches einer Schwenkbarkeit der Endabschnitte (6, 7) gegenüber dem Mittelabschnitt (8) um eine Hochachse des Gelenkfahrzeugs (1) erlaubt, und wobei
die Endabschnitte (6, 7) jeweils mit benachbarten Wagenkästen (2, 3) über Gelenke verbunden sind, welche eine Schwenkbarkeit um eine Querachse des Gelenkfahrzeugs (1) oder eine Längsachse des Gelenkfahrzeugs (1) erlauben, und wobei in dem Mittelabschnitt (8) mindestens eine Passagierraumtür (5) angeordnet ist.

2. Gelenkfahrzeug (1) nach Anspruch 1,
**dadurch gekennzeichnet, dass** die Passagierraumtür (5) zweiflügelig ausgeführt ist.

3. Gelenkfahrzeug (1) nach Anspruch 1 oder 2
**dadurch gekennzeichnet, dass**
an beiden Seiten des Gelenkfahrzeugs (1) Passagierraumtüren an dem Mittelabschnitt (8) angeordnet sind.

4. Gelenkfahrzeug (1) nach einem der Ansprüche 1 bis 3,
**dadurch gekennzeichnet, dass** die Passagierraumtür (5) entlang der Mantelfläche eines Zylinders gebogen ausgerichtet ist.

5. Gelenkfahrzeug (1) nach Anspruch 4,
**dadurch gekennzeichnet, dass**
die Passagierraumtür (5) teleskopartig aufgebaut ist, wobei die einzelnen Teleskopsegmente zum Öffnen der Tür (5) in eine Ausnehmung des Mittelabschnitts (8) schiebbar sind.

6. Gelenkfahrzeug (1) nach einem Ansprüche 1 bis 5,
**dadurch gekennzeichnet, dass** das Gelenkfahrzeug (1) als Straßenbahn ausgebildet ist.

7. Gelenkfahrzeug (1) nach einem Ansprüche 1 bis 5,
**dadurch gekennzeichnet, dass** das Gelenkfahrzeug (1) als Autobus ausgebildet ist.

8. Gelenkfahrzeug (1) nach einem Ansprüche 1 bis 5,
**dadurch gekennzeichnet, dass** das Gelenkfahrzeug (1) als U-Bahn ausgebildet ist.

## Claims

1. Articulated vehicle (1), comprising vehicle section bodies (2, 3) and at least one transition vehicle section (4) which is arranged between vehicle section bodies (2, 3), **characterized in that** the transition vehicle section (4) is constructed from three portions (6, 7, 8), two end portions (6, 7) being arranged at opposite ends of a centre portion (8) and being connected to the centre portion (8) in each case via a pivoting joint (9, 10) which permits a pivoting capability of the end portions (6, 7) about a vertical axis of the articulated vehicle (1) with respect to the centre portion (8), and the end portions (6, 7) being connected in each case to adjoining vehicle section bodies (2, 3) via joints which permit a pivoting capability about a transverse axis of the articulated vehicle (1) or a longitudinal axis of the articulated vehicle (1), and at least one passenger cabin door (5) being arranged in the centre portion (8).

2. Articulated vehicle (1) according to Claim 1, **characterized in that** the passenger cabin door (5) is configured with two leaves.

3. Articulated vehicle (1) according to Claim 1 or 2, **characterized in that** passenger cabin doors are arranged on the centre portion (8) on both sides of the articulated vehicle (1) .

4. Articulated vehicle (1) according to one of Claims 1 to 3, **characterized in that** the passenger cabin door (5) is oriented in a curved manner along the shell surface of a cylinder.

5. Articulated vehicle (1) according to Claim 4, **characterized in that** the passenger cabin door (5) is of telescopic construction, it being possible for the individual telescopic segments to be pushed into a recess of the centre portion (8) in order to open the door (5).

6. Articulated vehicle (1) according to one of Claims 1 to 5, **characterized in that** the articulated vehicle (1) is configured as a tram.

7. Articulated vehicle (1) according to one of Claims 1 to 5, **characterized in that** the articulated vehicle (1) is configured as a bus.

8. Articulated vehicle (1) according to one of Claims 1 to 5, **characterized in that** the articulated vehicle (1) is configured as a subway train.

## Revendications

1. Véhicule articulé (1), comprenant des caisses de voiture (2, 3) et au moins une voiture de jonction (4) agencée entre les caisses de voiture (2, 3),
**caractérisé en ce que** la voiture de jonction (4) est composée de trois sections (6, 7, 8), dans lequel
deux sections d'extrémité (6, 7) sont agencées au niveau d'extrémités opposées d'une section médiane (8) et sont reliées à la section médiane (8) respectivement par l'intermédiaire d'une articulation pivotante (9, 10) permettant aux sections d'extrémité (6, 7) de pivoter par rapport à la section médiane (8) autour d'un axe vertical du véhicule articulé (1), et dans lequel
les sections d'extrémité (6, 7) sont reliées respectivement à des caisses de voiture (2, 3) adjacentes par l'intermédiaire d'articulations permettant de pivoter autour d'un axe transversal du véhicule articulé (1) ou autour d'un axe longitudinal du véhicule articulé (1), et dans lequel
au moins une porte d'habitacle (5) est agencée dans la section médiane (8).

2. Véhicule articulé (1) selon la revendication 1,
**caractérisé en ce que** la porte d'habitacle (5) est réalisée avec deux battants.

3. Véhicule articulé (1) selon la revendication 1 ou 2,
**caractérisé en ce que** des portes d'habitacle sont agencées au niveau de la section médiane (8) de part et d'autre du véhicule articulé (1).

4. Véhicule articulé (1) selon l'une quelconque des revendications 1 à 3,
**caractérisé en ce que** la courbe de la porte d'habitacle (5) suit la surface latérale d'un cylindre.

5. Véhicule articulé (1) selon la revendication 4,
**caractérisé en ce que** la porte d'habitacle (5) est réalisée de manière télescopique, dans lequel les segments télescopiques individuels peuvent être poussés dans un évidement de la section médiane (8) afin d'ouvrir la porte (5).

6. Véhicule articulé (1) selon l'une quelconque des revendications 1 à 5,
**caractérisé en ce que** le véhicule articulé (1) est réalisé sous forme de tramway.

7. Véhicule articulé (1) selon l'une quelconque des revendications 1 à 5,
**caractérisé en ce que** le véhicule articulé (1) est réalisé sous forme d'autobus.

8. Véhicule articulé (1) selon l'une quelconque des revendications 1 à 5,
**caractérisé en ce que** le véhicule articulé (1) est réalisé sous forme de métro.
